# EUROPEAN PATENT SPECIFICATION

(11) **EP 2 581 243 B1**
(45) Date of publication and mention of the grant of the patent: **09.10.2019**
(21) Application number: 11184780.2
(22) Date of filing: 12.10.2011
(51) Int. Cl.: B60J 1/02, B60J 1/00, B60R 21/34

(54) **CONTROLLED COLLAPSE OF CAR WINDSHIELD**
GESTEUERTES ZUSAMMENFALLEN EINER AUTOSCHEIBE
EFFONDREMENT CONTRÔLÉ DE PARE-BRISE DE VÉHICULE

(43) Date of publication of application: 17.04.2013
(73) Proprietor: Volvo Car Corporation, 40531 Göteborg (SE)
(72) Inventor: Dominique, Christer, 42353 Torslanda (SE); Porsgaard, Peter, 44836 Floda (SE)
(74) Representative: Kransell & Wennborg KB

(56) References cited:
- EP-A1- 0 597 624
- EP-A1- 1 371 509
- DE-A1- 10 305 733
- DE-A1- 10 314 443
- DE-A1- 19 733 034
- DE-A1-102009 036 666
- DE-B3- 10 225 555
- DE-C- 822 782
- GB-A- 1 221 285
- US-A- 4 635 420

## Description

### TECHNICAL FIELD

The present invention relates to a windshield for a vehicle to a vehicle with such a windshield.

### BACKGROUND ART

Modern cars become safer and safer every year. Nowadays they are equipped with air bags, belts, alarms for detecting a nearby obstruction. Mostly, the safety measures are meant to protect the car driver and her passengers. However, some renowned car manufacturers are also investing in safety measures for the pedestrians. One example is the automatic braking in case a car system detects a hazardous situation. In such a case, the car will start braking even before the driver becomes aware of the danger. Even with such techniques used, it may occur that a pedestrian hits the windshield in case of an accident.

Because of the curved shape, i.e. convex form, the modern windshields are very strong and cause serious injuries when a pedestrian hits the windshield. So there is a need for further improvement of the safety of cars and other vehicles to decrease the number of serious injuries.

European patent no. 0597624 discloses an energy absorbing mounting system for vehicle windows preventing head injuries for the occupant of the vehicle. A plastic window is provided with grooves or notches forming a breakaway zone in the window, wherein the grooves or notches are provided such that at moderate vehicle velocities the plastic window, being slightly resilient, will stretch out in order to attenuate the impact of the collision or such. At higher vehicle velocities the force exerted by the occupant on the window at impact will break the window along the breakaway zones at collision, and the window will be pushed out and released. The plastic window will remain in one piece in order to prevent lacerations of the occupant. EP 0597624 also discloses a mounting system for such plastic window. Documents DE 10 2009 036 666 A1, DE 103 14 443 A1 and DE 197 33 034 A1 disclose further vehicle windshields comprising pyrotechnic devices.

### SUMMARY OF THE INVENTION

The object of the present invention is therefore, to provide a vehicle that is arranged to lower the risks of serious pedestrian injuries in case of a collision with a pedestrian.

This object is achieved by providing a vehicle comprising a windshield, characterized in that the windshield further comprises weakening means arranged to weaken the windshield so that the windshield collapses in a controlled manner in the event of a collision with a person. By weakening the windshield, a pedestrian hitting the windshield will experience less force and therefore the risk of serious injuries is decreased.

In a first embodiment not according to the invention, the weakening means comprise a relatively weak part of the windshield. The relatively weak part comprises at least one break line in the windshield. By weakening a part of the windshield, the windshield will collapse more easily as compared to a state of the art windshield. This will result in fewer injuries for the person hitting the windshield.

The break line may be arranged in a longitudinal direction relative to the windshield. This will result in a very controlled collapse of the windshield. Preferably, the break line is arranged in a lower part of the windshield. In this way the break line will not obstruct the sight of the driver in any way. In an embodiment, the break line is arranged at a distance between 3 and 15 cm away from the lower edge of the windshield.

In an embodiment not according to the invention, the break line has a minimal thickness which is about 70% to 80% of a thickness of the windshield. These values have shown good result in crash tests.

In an alternative embodiment not according to the invention, a vertical cross section of the windshield comprises a convex part and said relatively weak part formed by a flat or concave part of the windshield. The flat or concave part will weaken the further convex windshield, resulting in an easier collapse of the windshield as compared to the state of the art.

According to the invention the weakening means comprises a pyrotechnic device arranged to damage said windshield, a sensor arranged to detect a person in the vicinity of said windshield, and a control module arranged to activate said pyrotechnic device if the person is detected and the vehicle has a predetermined minimal speed. The pyrotechnic device may be arranged near an edge of the windshield, so as to directly damage the edge of the windshield, which will in most case also damage the complete windshield.

The invention also relates to a windshield for use in a vehicle as described above.

### BRIEF DESCRIPTION OF THE DRAWINGS

The present invention will be further described below by way of example only and with reference to the accompanying drawings. Figures 1-4 do not form part of the invention.
Figure 1 is a perspective view of a windshield according to an example not part of the invention;
Figure 2 is a cross section of part of the windshield of Figure 1 showing a break line;
Figure 3 shows a curvature of a windshield according to another example not part of the invention;
Figure 4 shows a curvature of a windshield according to a further example not part of the invention;
Figure 5 schematically shows a vehicle comprising sensors and devices according to an embodiment of the invention; and
Figure 6 schematically shows a pyrotechnic device used in an embodiment of the invention.

### DETAILED DESCRIPTION

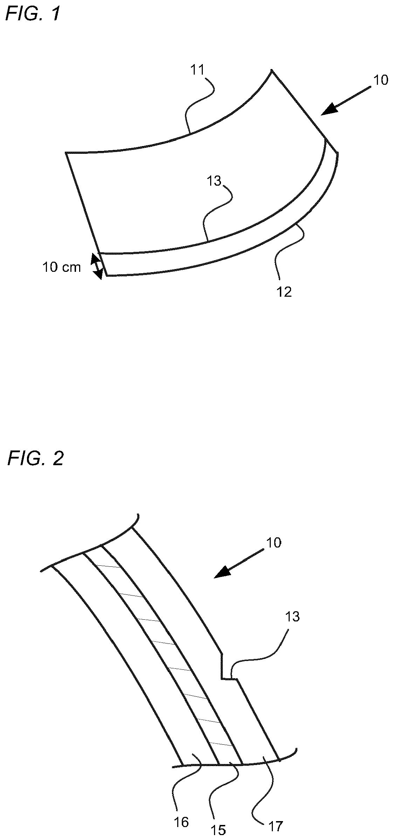

Figure 1 is a perspective view of a windshield 10 according to an embodiment not of the invention. The windshield 10 is curved in both the horizontal plane and the vertical plane.

The windshield has an upper edge 11 and a lower edge 12. It should be noted that when using the words 'upper' and 'lower', 'horizontal' and 'vertical', in relation to the windshield in this description, a windshield is meant when being fixed into a bodywork of a vehicle standing on a horizontal ground.

In the embodiment of Figure 1, the windshield comprises a break line 13. The break line 13 is arranged to weaken the windshield 10 so that the windshield 10 collapses in a controlled manner in the event of a collision with a person (not shown). This will result in a damaged and softened windshield avoiding serious injuries to the person hitting the windshield.

The break line preferably is arranged in a longitudinal direction of the windshield, as shown in Figure 1. The advantage of a longitudinal break line is that, in the event of a collision, the windshield will collapse in a controlled way wherein the entire windshield will collapse as soon as a certain local impact occurs. In the embodiment of Figure 1, the break line 13 is arranged at the bottom of the windshield 10. In an embodiment the break line is arranged at a distance from the lower edge 12 of the windshield 10 between 3 and 15 cm, such as for example 10 cm. An advantage of a relatively low positioned break line 13 is that it is arranged in a portion of the windshield 10 which is usually not used for vision towards the outside. So the break line 13 will not be an obstruction for the sight for the driver.

Figure 2 is a cross section of part of the windshield 10 of Figure 1 showing the break line 13. The break line 13 can be a scraped line scraped into the glass of the windshield 10. In an embodiment, the windshield is substantially build up by three layers. An intermediate layer 15 sandwiched between an inside glass layer 16 and an outside glass layer 17. The intermediate layer may comprise plastic as will be known by the skilled person.

In this embodiment, the scraped line preferable is arranged in the outside glass layer 17 as shown in Figure 2. In an embodiment the windshield at the break line has a minimal thickness which is about 70% - 80% of the total thickness of the windshield 10. These percentages are preferred since the windshield will not get to weak.

The break line can also be arranged in both the outer glass layer 17 as in the inner glass layer 16. It should be noted that the break line 13 can be any other indentation or groove. Furthermore it should be noted that there can be more than one break line and that the one or more break lines 13 do not necessarily run along the edge of the windshield. They can be orientated in any other direction. They can also have different forms, such as small circles, or one or more squares. The break line(s) may be arranged near the outer edges of the windshield 10, but the invention is not restricted to that solution.

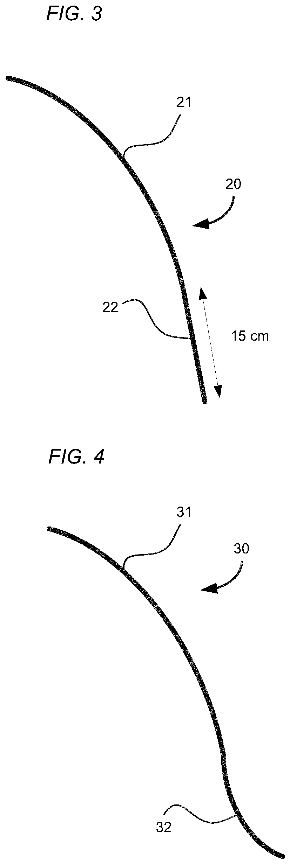

Figure 3 shows a curvature of a windshield 20 according to another embodiment not according to the invention. The windshield 20 has a vertical cross section comprising a convex part and a relatively weak part formed by a flat part 22. By creating a flat part in the windshield, the windshield will be weaker than in a complete convex form and therefore it will more easily collapse in case of a collision. Typical values for the flat part 22 may be between 5 and 20 cm. Other values are possible, depending on the vertical or horizontal curvature of the windshield, thickness and material. Instead of using a flat portion, the windshield 30 could have a concave part 32, as is shown in Figure 4 in which the a windshield is shown having a convex part 31 and a concave part 32. The flat or concave part 22, 32 preferably covers less than 30% of the height of the screen, more preferably between 10 - 25%.

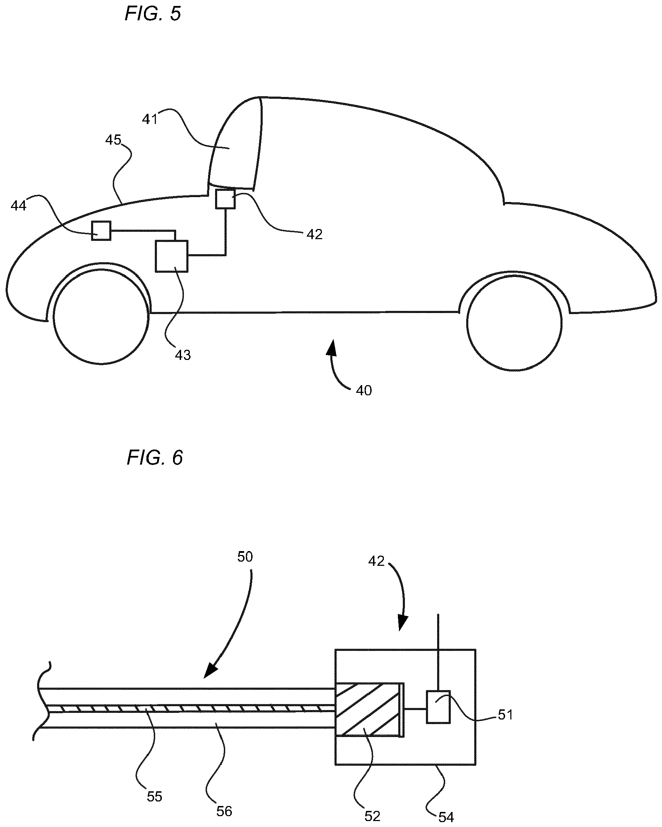

Figure 5 schematically shows a vehicle 40 comprising a windshield 41 and a pyrotechnic device 42 arranged to damage the windshield 41. The vehicle 40 also comprises a control module 43 arranged to activate the pyrotechnic device 42 if a person is detected and the vehicle has a predetermined minimal speed. A sensor 44 is arranged to detect a person in the vicinity of the windshield 41. The sensor 44 may be a movement sensor or any other sensor suitable to detect a person in front of the car vehicle or on top of the hood 45. The sensor 44 may be a standard crash sensor, but could also be the sensor activating the pedestrian protection airbag (blowing up covering the windshield).

Figure 6 schematically shows a pyrotechnic device 42 used in an embodiment of the invention. The windshield 50 in this example comprises an intermediate layer 55 sandwiched between an inside glass layer 56 and an outside glass layer 57. The intermediate layer 55 may comprise a plastic of polymer as will be known to the skilled person. At a border of the windshield 50 the pyrotechnic device 42 is positions. The pyrotechnic device 42 comprises a housing 51, an electronic control unit 51 and an explosive compartment 52. Once a signal is received by the electronic control unit 51, an activation signal will be sent to the explosive compartment 52 and the explosive in the compartment 52 will be ignited resulting in a controller explosion. This explosion will cause damage to the windshield 50 which, because of its glass structure, will collapse. Because of the presence of the intermediate layer 55, the windshield 50 will stay in one piece but will be softened avoiding or decreasing the chance of injuries for the person hitting the vehicle 40.

It is obvious to a skilled person that the present invention can be modified within the scope of the subsequent claims without departing from the idea and purpose of the invention. For instance, the vehicle described above can be a car, but it may as well be a truck or any other vehicle having a windshield.

## Claims

1. A windshield (10, 20, 30, 41) for a vehicle (40),
**characterized in**
**that** the windshield comprises weakening means (13; 22; 42) arranged to weaken said windshield so that the windshield collapses in a controlled manner in the event of the vehicle (40) colliding with a pedestrian and the pedestrian being in the vicinity of the windshield, wherein said weakening means comprises:
- a pyrotechnic device (42) arranged to damage said windshield;
- a sensor (44) arranged to detect the pedestrian in the vicinity of said windshield;
- a control module (43) arranged to activate said pyrotechnic device if said pedestrian is detected and said vehicle has a predetermined minimal speed.

2. A windshield arrangement according to claim 1, wherein said pyrotechnic device (42) is arranged near an edge of said windshield (41).

3. A vehicle (40) comprising a windshield (10; 20; 30; 41) according to any of the preceding claims.

## Patentansprüche

1. Windschutzscheibe (10, 20, 30, 41) für ein Fahrzeug (40),
**dadurch gekennzeichnet,**
**dass** die Windschutzscheibe ein Schwächungsmittel (13; 22; 42) umfasst, das dahingehend angeordnet ist, die Windschutzscheibe zu schwächen, so dass die Windschutzscheibe in dem Fall, dass das Fahrzeug (40) mit einem Fußgänger zusammenstößt und sich der Fußgänger in der Nähe der Windschutzscheibe befindet, gesteuert zusammenfällt,
wobei das Schwächungsmittel Folgendes umfasst:
- eine pyrotechnische Vorrichtung (42), die dahingehend angeordnet ist, die Windschutzscheibe zu beschädigen;
- einen Sensor (44), der dahingehend angeordnet ist, den Fußgänger in der Nähe der Windschutzscheibe zu detektieren;
- ein Steuermodul (43), das dahingehend angeordnet ist, die pyrotechnische Vorrichtung zu aktivieren, wenn der Fußgänger detektiert wird und das Fahrzeug eine vorbestimmte Mindestgeschwindigkeit hat.

2. Windschutzscheibenanordnung nach Anspruch 1, wobei die pyrotechnische Vorrichtung (42) in der Nähe eines Rands der Windschutzscheibe (41) angeordnet ist.

3. Fahrzeug (40), das eine Windschutzscheibe (10; 20; 30; 41) nach einem der vorhergehenden Ansprüche umfasst.

## Revendications

1. Pare-brise (10, 20, 30, 41) pour un véhicule (40),
**caractérisé en ce que**
le pare-brise comprend un moyen d'affaiblissement (13 ; 22 ; 42) prévu pour affaiblir ledit pare-brise de telle sorte que le pare-brise s'affaisse de manière contrôlée en cas de collision du véhicule (40) avec un piéton, le piéton étant à proximité du pare-brise, ledit moyen d'affaiblissement comprenant :
- un dispositif pyrotechnique (42) agencé de manière à endommager ledit pare-brise ;
- un capteur (44) agencé de manière à détecter le piéton à proximité du pare-brise ;
- un module de commande (43) agencé de manière à activer ledit dispositif pyrotechnique si ledit piéton est détecté et si le véhicule a une vitesse minimale prédéterminée.

2. Agencement de pare-brise selon la revendication 1, dans lequel ledit dispositif pyrotechnique (42) est agencé à proximité d'un bord dudit pare-brise (41) .

3. Véhicule (40) comprenant un pare-brise (10 ; 20 ; 30 ; 41) selon l'une quelconque des revendications précédentes.
